(19) Europäisches Patentamt
European Patent Office
Office européen des brevets

(11) Publication number: **0 013 824**
**B1**

(12) # EUROPEAN PATENT SPECIFICATION

(45) Date of publication of patent specification: **22.06.83**

(51) Int. Cl.³: **C 09 D 3/81**, C 08 G 59/32, C 08 G 59/40

(21) Application number: **79303001.6**

(22) Date of filing: **21.12.79**

(54) **Coating compositions containing an hydroxy functional organophosphate ester.**

(30) Priority: **26.12.78 US 973321**
**26.12.78 US 973322**
**26.12.78 US 973331**
**26.12.78 US 973418**

(43) Date of publication of application:
**06.08.80 Bulletin 80/16**

(45) Publication of the grant of the patent:
**22.06.83 Bulletin 83/25**

(84) Designated Contracting States:
**DE FR GB IT**

(56) References cited:
**DE - C - 952 386**
**FR - A - 1 373 868**
**FR - A - 1 577 749**
**FR - A - 2 413 450**
**GB - A - 2 011 423**
**US - A - 3 651 169**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **Ford Motor Company**
**The American Road**
**Dearborn MI 48121 (US)**
(84) **IT**

(72) Inventor: **Chattha, Mohinder S.**
**33466 Vargo**
**Livonia Michigan 48152 (US)**

(74) Representative: **Drakeford, Robert William et al.**
**Ford Motor Company Limited 15/448, Research & Engineering Centre Laindon**
**Basildon Essex SS15 6EE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

EP 0 013 824 B1

# Coating compositions containing an hydroxy functional organophosphate ester

This invention relates to coating compositions of the type comprising a film forming component and an amino compound, wherein the composition cures by reaction between the amino compound and hydroxy functionality present on the film forming material. More particularly, the invention relates to thermosetting coating compositions of the aforementioned type wherein the composition includes at least one hydroxy functional organophosphate ester selected from certain mono- and diesters of phosphoric acid.

Thermosetting coating compositions which cure by reaction of hydroxy functionality with an amino compound are well known in the art. It is also well recognized in the art that it is desirable to catalyze the hydroxy/amino crosslinking reaction in order to attain a quicker and more complete cure of the coating composition. To this end, materials which increase the rate of this reaction have been developed and are also well known. Although such materials are usually consumed in the reaction and therefore do not act as true catalysts, they are referred to in the art as catalysts.

USA 365169 discloses the use of alkyl and aryl esters of phosphoric acid as catalysts for the reaction between urea- or melamine aldehyde resins and hydroxyl containing resins.

FR—A 1577749 discloses the use of partial $C_1$—$C_5$ hydroxy-alkyl or hydroxy aryl esters of phosphoric acid as hardeners for epoxide resins.

US—A 3,960,979 and 4,018,848 to Khanna teach high solids coating compositions adapted for use as a can coating material. The compositions consist essentially of (i) aromatic epoxide compositions having two or more epoxy groups on an epoxy resin which has a molecular weight not exceeding 2500; (ii) an amino crosslinking agent; (iii) an inorganic or organic monomeric or polymeric acid which acts as a reactive catalyst; and (iv) a flexibilizing polyol.

The compositions of Khanna have the advantage of quick reaction and low application viscosity, but lack durability, and, therefore, do not weather well. This is, in part, because of the presence of ether linkages in the aromatic epoxides. As such, the compositions of Khanna are not desirable for use as automotive top-coats. The Khanna patents describe the compositions as a low cure system. However, when considering the specific teachings of the patents one finds that the compositions includes an excess of epoxide resin, apparently with the purpose of "killing off" excess catalyst after completion of the curing reaction. Excess epoxy resin in the composition remains uncured at the low temperature bake range of the baking temperatures disclosed, not giving a complete cure and desirable hardness, durability or solvent resistance. If heated to higher temperatures, as called for in the examples, the excess epoxy does react with excess hydroxy functionality to give still further ether linkages. These ether linkages so obtained have a further deleterious effect on durability and make the materials particularly unsuitable for use an an automotive topcoat. Also, the necessary high bake temperatures to achieve the utilization of this excess epoxy makes the composition undesirable from an energy point of view. Still further, because the epoxy/catalyst reaction occurs in early stages of the cure, thus "killing off" the catalyst, the melamine-hydroxy curing reaction must proceed substantially without benefit of catalysis. The curing reaction thus proceeds slowly and requires the higher temperatures of the Khanna examples.

Because of increasingly strict solvent emissions regulations in recent years, low solvent emission paints have become very desirable. A number of high solids paint compositions have been proposed to meet these low solvent emission requirements. However, many of these compositions are deficient because of difficulty in application, slow curing rates, lack of flexibility, poor durability and low solvent and water resistance. Many of the proposed compositions have been particularly deficient as automotive topcoats, particularly when the topcoat is to include metallic flake as a pigment.

The deficiency in compositions including metallic flake results from undesired reorientation of the metallic flake during application and cure of the coating. Flake reorientation results primarily because of the very low viscosity resins used in the paint compositions to accommodate high solids. The low viscosity is not sufficient to immobilize the flakes which tend to redistribute themselves to show "reverse flop" and nonuniform distribution.

According to the present invention, there is provided a coating composition comprising a film-forming component and an amino compound, which composition cures by reaction between said amino compound and hydroxy functionality present in said film-forming component, characterised in that the composition includes at least one hydroxy functional organophosphate ester having the formula:

$$(R—O \rightarrow_{n} \overset{\overset{O}{/\!/}}{P} \leftarrow OH)_{3-n}$$

wherein n = 1 to 2 and the or each group R is independently selected from mono- and dihydroxy radicals containing one or more ester linkages and having a molecular weight of from 120 to 1500.

The use of such oligomeric hydroxy functional organophosphate ester as catalysts improves the

rate of cure of the coatings at low temperature and produces coatings with superior properties as compared with the catalysts of the prior art referred to above. In addition, the oligomeric hydroxy functional organophosphate ester catalyst does not become involved in deleterious side reactions as is the case with many conventional catalysts and has the further advantage of not leaching out of the coating composition after curing is completed.

More specifically, the coating compositions of the invention include the broad class of thermosetting compositions wherein hydroxy functionality is either initially present, generated in situ, or both initially present, and generated in situ, is crosslinked with conventional amino functional crosslinking agents. As will be more fully described hereinafter, the hydroxy functionality which may be generated in situ may be generated in any manner known to the art with respect to this type of composition or it may be generated by a reaction between the catalyst itself and functionality in the film forming material, in particular, between the catalyst and epoxy functionality in the film forming material. In this case, the catalyst serves as a reactant which helps generate the hydroxy functionality subsequently engaged in the crosslinking reaction with the amino compound.

The preferred compositions of the invention contain greater than 60 percent by weight of nonvolatile solids, preferably greater than 70 percent by weight, and are capable of curing rapidly at low temperature. These compositions, exclusive of pigments, solvents and other non-reactive components, consists essentially of: (A) a film-forming resin bearing epoxy functionality of both epoxy and hydroxy functionality; (B) the organophosphate ester described above; (C) an amino crosslinking agent; (D) up to about 45 weight percent based on the total of (A), (B), (C) and (D) of a hydroxy functional additive.

The oligomeric organophosphate ester is included in the composition in an amount sufficient to provide from 0.8 to 1.5 equivalents, preferably between 0.9 and 1.2 equivalents, of acid functionality for each equivalent of epoxy functionality on the film-forming resin. The amino resin crosslinking agent is included in the composition in an amount sufficient to provide at least .4 equivalents, preferably from .6 to 2.1 equivalents, of nitrogen crosslinking functionality for each equivalent of hydroxy functionality included in the composition either as (i) an organic hydroxyl group on the oligomeric organophosphate ester, (ii) hydroxy functionality on the film-forming resin, (iii) a hydroxyl group on the optional hydroxy functional additive, or (iv) as a result of esterification of the epoxy functionality of the film-forming resin during cure of the coating composition. Other ingredients of the composition may include additives such as catalysts, antioxidants, U.V. absorbers, flow control or wetting agents, antistatic agents, pigments, plasticizers and solvents.

The preferred coating compositions of this invention combine the above discussed desired properties and low application viscosity with rapid cure so as to overcome deficiencies of previously proposed high solids materials and thereby achieve a high solids coating composition particularly adapted for automotive topcoats and still more particularly adapted for automotive topcoats including metallic flake as a pigment.

Particularly preferred compositions within the scope of the invention are fast curing, high solids, thermosetting coating compositions. More particularly, these preferred compositions are adapted to provide an automotive topcoat which demonstrates hardness, high gloss, outstanding durability and excellent resistance to solvents and water. Still more particularly, the preferred compositions are fast curing, high solids, thermosetting coating compositions adapted to be used as an automotive topcoat including metallic flake as a pigment.

As discussed generally above, the coating compositions of the invention are thermosetting materials comprising a film forming material bearing hydroxy functionality which is formed by in situ reaction, an amino compound crosslinking agent, and the improved catalyst of the invention comprising at least one oligomeric hydroxy functional organophosphate ester selected from certain mono- and diesters of phosphoric acid.

The preferred high solids coating composition of the invention overcome disadvantages of prior art high solids compositions, including those of the Khanna patents discussed above, to provide a system which is particularly suitable for those applications requiring high gloss, hardness, durability, and high solvent and water resistance as well as a fast cure rate at low temperatures, e.g., from 75°C to 150°C, preferably from 110°C to 130°C. The desirable characteristics of these preferred compositions of the invention result from the carefully controlled admixture of the particular components, including an oligomeric hydroxy functional organophosphate ester, to achieve substantially complete utilization of reactant functionality and a resultant highly crosslinked coating in a fast and efficient manner.

Each of the components of the compositions of the invention, in general, and the high solids coating compositions in particular, are described hereinafter in greater detail.

## Oragnophosphate Ester

The novel oligomeric hydroxy functional organophosphate ester is present in the compositions of the invention as a mono- or diester of phosphoric acid or as a mixture of such mono- and diesters. The hydroxy functional organophosphate esters useful in the composition of the invention are those having the formula:

$$(R-O)_{n}P(=O)(OH)_{3-n}$$

wherein n = 1 to 2 and R is selected from mono- or dihydroxy radicals containing one or more ester linkages and having a molecular weight of from 120 to 1500.

A preferred method for preparing the oligomeric hydroxy functional organophosphate esters useful in compositions of the invention is by an esterification reaction between an excess of a di- or trihydroxy alkyl, cycloalkyl or aryl oligoester and phosphorus pentoxide. When a trihydroxy oligoester is used as a reactant, preferably at least one of the hydroxyl groups should be secondary. The reaction between the di- or trihydroxy oligoester and the phosphorus pentoxide is generally carried out by adding phosphorus pentoxide portionwise to an excess of the di- or trihydroxy oligoester in a liquid state or in solution in a suitable solvent. Suitable solvents include, but are not limited to, butyl acetate, methyl ethyl ketone, toluene and xylene.

The hydroxy functional oligoesters useful in preparing the oligomeric hydroxy functional organophosphate esters used in the compositions of the invention have a molecular weight of from 120 to 1500. Such oligoesters may be prepared in accordance with numerous procedures recognized in the art. For example, the hydroxy functional oligoesters may be selected from the group consisting of: (i) dihydroxy oligoesters prepared by reacting a dicarboxylic acid with a monoepoxide, (ii) trihydroxy oligoesters prepared by reacting a monohydroxy dicarboxylic acid with a monoepoxide; (iii) dihydroxy oligoesters prepared by reacting a monocarboxylic acid with a diepoxide; (iv) trihydroxy oligoesters prepared by reacting a monocarboxylic acid with a monohydroxy diepoxide; (v) dihydroxy oligoesters prepared by reacting a monohydroxy monocarboxylic acid with a monoepoxide; (vi) trihydroxy oligoesters prepared by reacting a monohydroxycarboxylic acid with a monohydroxy monoepoxide; (viii) trihydroxy oligoesters prepared by reacting a monocarboxylic acid with a dihydroxy monoepoxide; (ix) dihydroxy oligoesters prepared by reacting a monocarboxylic acid with a monohydroxy monoepoxide; and (x) di- or trihydroxy oligoesters prepared by reacting polycaprolactones with diols or triols.

Dihydroxyoligoesters prepared by reacting a dicarboxylic acid with a monoepoxide and designated by (i) above are well known in the art. The most common of this group is a low molecular weight adduct of an aliphatic, cycloaliphatic or aryl dicarboxylic acid and a monoepoxide. Most commonly used monoepoxides are alkylene oxides such as ethylene oxide or propylene oxide. Among the numerous dicarboxylic acids which may be used are malonic acid, succinic acid, glutaric acid, 1,9 nonanedioic acid, 1,4-cyclohexanedicarboxylic acid and terephthalic acid. Preferred dicarboxylic acids are $C_6$—$C_{12}$ aliphatic acids as well as mixtures of these acids or mixtures of the aliphatic dicarboxylic acids with cycloaliphatic or aromatic dicarboxylic acids. These above described adducts, which are prepared by reacting the acid and epoxide in the presence of a catalyst, have a narrow molecular weight distribution when compared to similar compositions made by normal polyester manufacturing techniques. While the specific reactants enumerated above will result in compounds containing two (2) ester groups, it will be appreciated that additional ester linkages may be present in the compound as a result of being included as a part of a radical borne by either the monoepoxide or the dicarboxylic acid. For example, an oligoester bearing more than two ester linkages may be prepared by reacting dicarboxylic acid with a glycidyl carboxylate monoepoxide. This reaction results in a dihydroxy oligoester bearing four (4) ester linkages. Of course, various other combinations of dibasic acids and monoepoxides will be apparent to the skilled artisan.

In preparing the trihydroxy oligoesters designated as (ii) above, numerous monohydroxy dicarboxylic acids may be employed in lieu of the dicarboxylic acids previously described. Representative of these monohydroxy aliphatic, cycloaliphatic or aromatic dicarboxylic acids are malic acid, hydroxyglutaric acid, 2-hydroxy-1,4-cyclohexanedicarboxylic acid and 2-methylol-terephthalic acid. As with oligoesters designated by (i) above, the preferred monohydroxydicarboxylic acids are $C_6$—$C_{12}$ aliphatic acids, mixtures of those acids or mixtures of those acids with cycloaliphatic or aromatic dicarboxylic acids.

In preparing dihydroxy oligoesters designated as (iii) above, a monocarboxylic acid is reacted with a diepoxide. Representative of the numerous aliphatic, cycloaliphatic or aromatic monocarboxylic acids which may be used are pentanoic acid, hexanoic acid, heptanoic acid, cyclohexane carboxylic acid and benzoic acid. Preferred monocarboxylic acids are acetic acid, propionic acid and butyric acid. Among the numerous suitable diepoxides which will be apparent to those skilled in the art are: cycloaliphatic diepoxides and glycidyl ethers of aliphatic and aromatic dihydroxy compounds. As was the case above, polyester linkages other than those resulting from the esterification reaction between the acid and epoxy groups may be included by using acids or diepoxides containing a radical bearing one or more ester linkages. For example, acetic acid could be reacted with bis-(3,4-epoxy-6-methylcyclohexylmethyl) adipate to yield an oligoester with four (4) ester linkages.

Trihydroxy oligoesters designated (iv) may be prepared by reacting monocarboxylic acids such as described in (iii) with monohydroxy diepoxides. Typical monohydroxy diepoxides are: hydroxyglycidyl ethers of bisphenol A and aliphatic hydroxyglycidyl resins. As above, radicals bearing additional ester linkages may be included in the acid or diepoxide.

Dihydroxy oligoesters designated as (v) above may be prepared by reacting a monohydroxy monocarboxylic acid with a monoepoxide. Representative of the numerous aliphatic, cycloaliphatic or aromatic monohydroxy monocarboxylic acids are 3-hydroxybutyric acid, 4-hydroxycyclohexylcarboxylic acid and 4-methylol benzoic acid.

Suitable monoepoxides are enumerated above in the discussion of oligoesters (i) and (ii). As in all cases, radicals bearing additional ester linkages may be included.

The trihydroxy oligoester of (vi) is a variation of (v) with the reactants being a monoepoxide as above and a dihydroxymonocarboxylic acid, such as 3,4-trihydroxybutyric acid and glyceric acid.

The trihydroxy oligoester of (vi) is prepared by reacting a monohydroxy monocarboxylic acid such as in (v) above with a monohydroxy monoepoxide such as, for example, glycidol and 1,4-butanediol-monoglycidyl ether. As in other cases, additional ester linkages may also be included in the oligoester.

The trihydroxy oligoester designated (viii) may be prepared by reacting a monocarboxylic acid as above with a dihydroxy monoepoxide such as acetic acid with 2,3-epoxy-1,4-butane diol. Additional ester linkages may be included, if desired.

The dihydroxy oligoester (ix) is prepared by reacting a monocarboxylic acid with a monohydroxy monoepoxide. Both reactants are discussed above and, as in other cases, additional ester linkages may be added using ester bearing radicals.

Hydroxy functional oligoesters of the type designated by (x) above are known in the art. Caprolactones reacted with diols yield dihydroxy oligoesters while reaction with triols yields trihydroxy oligoesters.

A preferred temperature for carrying out the reaction between the hydroxy functional oligoester and the phosphorus pentoxide is from 50°C to 55°C. Due to the multiple hydroxy functionality of the di- or trihydroxy oligoester, minor amounts of polymeric acid phosphate as well as certain cyclophosphates are also generated during the synthesis. These polymeric and cyclic materials also serve as a reactive catalyst and, therefore, need not be separated from the hydroxyphosphate esters described above. In fact, it has been found advantageous in preferred embodiments of the invention to employ all reaction products, i.e., the hydroxy functional organophosphate esters and the minor amount of polymeric acid phosphate cyclophosphates, as well as excess di- or trihydroxy oligoester in the coating compositions. The excess di- or trihydroxy oligoester serves in those compositions as the optional hydroxy functional additive. Reactive catalysts prepared by the above preferred method will generally include about a 1 to 1 ratio of the mono- and diester organophosphate.

The oligomeric hydroxy functional organophosphate ester component of the thermosetting coating composition of the invention is a reactive catalyst which allows the composition to cure rapidly at a low temperature. The hydroxy functionality present on the oligomeric hydroxy functional organophosphate ester engages in the crosslinking reaction by reacting with the amino compound in addition to catalyzing the reaction between the amino compound and the hydroxy functionality present in the film forming materials. It is this reaction of the hydroxy functionality of the oligomeric hydroxy functional organophosphate ester which probably accounts for the fact that the catalyst does not leach out of the finally cured composition. Thus, the catalyst serves not only to catalyze the reaction between the film forming material and the crosslinking agent, but also to more completely tie up the matrix of the composition and provide a more completely integrated crosslinked composition. In those embodiments of the invention wherein the film forming material also includes an epoxy material, either on the same compound as the hydroxy functionality or on a separate compound forming a part of the film forming material, the oligomeric hydroxy functional organophosphate ester of the invention serves as a reactive catalyst in another sense. In this case, the acid functionality of the mono- or diester or mixture of such esters reacts with the epoxy functionality of the film forming material to form an ester and a hydroxyl group. This hydroxyl group, as well as the organic hydroxyl groups on the oligomeric hydroxy functional organophosphate ester and the other hydroxy functionality which may be present in the film forming material is available for crosslinking with the amino crosslinking agent.

The amount of the oligomeric hydroxy functional organophosphate which is included in the compositions of the invention will vary depending upon the nature of the film forming material employed and is a matter of choice which will be made by one skilled in the art.

Film Forming Material

As discussed above, film forming materials which either include hydroxy functionality initially, generate hydroxy functionality as a result of in situ reactions during the coating process or both include hydroxy functionality initially and generate it in situ, are well known to those skilled in the art. Selection of those materials will be a matter of choice and it will be recognized that the oligomeric hydroxy functional organophosphate is equally applicable to all such hydroxy bearing film forming materials crosslinked with amino compound.

While it is intended that all such hydroxy bearing film forming materials be included within the scope of the invention, several of these materials will be discussed below in greater detail for purposes of exemplification.

As discussed above, the film forming material may consist essentially of a compound which bears hydroxy functionality prior to initiation of the curing reaction. In most coating compositions, such

materials should have a number average molecular weight ($\overline{M}_n$) of at least 150. A preferred type of hydroxy functional material which meets these limitations consists essentially of a copolymer bearing pendent hydroxy functionality. One class of such materials has a number average molecular weight ($M_n$) of from 1000 to 20,000 and a glass transition temperature (Tg) of from −25°C to 70°C. Such a copolymer may, for example, consist of from 5 to 30 weight percent of monoethylenically unsaturated monomers bearing hydroxy functionality and from 95 to 70 weight percent of other monoethylenically unsaturated monomers.

The long list of hydroxy functional monomers which may be employed in these hydroxy functional copolymers includes, but is not limited to, the following esters of acrylic or methacrylic acid and aliphatic alcohols: 2-hydroxyethyl acrylate; 3-chloro-2-hydroxypropyl acrylate; 2-hydroxy-1-methylethyl acrylate; 2-hydroxypropyl acrylate; 3-hydroxypropyl acrylate; 2,3-dihydroxypropyl acrylate; 2-hydroxybutyl acrylate; 4-hydroxybutyl acrylate; diethyleneglycol acrylate; 5-hydroxypentyl acrylate; 6-hydroxyhexyl acrylate; triethyleneglycol acrylate; 7-hydroxyheptyl acrylate; 2-hydroxymethyl methacrylate; 3-chloro-2-hydroxy-propyl-methacrylate; 2-hydroxy-1-methylethyl methacrylate; 2-hydroxypropyl methacrylate; 3-hydroxypropyl methacrylate; 2,3-dihydroxypropyl methacrylate; 2-hydroxybutyl methacrylate; 4-hydroxybutyl methacrylate; 3,4-dihydroxybutyl methacrylate; 5-hydroxypentyl methacrylate; 6-hydroxy hexyl methacrylate; 1,3-dimethyl-3-hydroxybutyl methacrylate; 5,6-dihydroxyhexyl methacrylate; and 7-hydroxyheptyl methacrylate.

Although one of ordinary skill in the art will recognize that many different hydroxy bearing monomers including those listed above could be employed, the preferred hydroxy functional monomers for use in the hydroxy functional resin of the invention are $C_5$—$C_7$ hydroxy-alkyl-acrylates and/or $C_6$—$C_8$ hydroxy-alkyl-methacrylates, i.e., esters of $C_2$—$C_4$ dihydric alcohols and acrylic or methacrylic acids.

The remainder of the monomers forming the hydroxy functional copolymer, i.e., from 90 to 70 weight percent, are other monoethylenically unsaturated monomers. These monoethylenically unsaturated monomers, are preferably alpha, beta olefinically unsaturated monomers, i.e., monomers bearing olefinic unsaturation between the two carbon atoms in the alpha and beta positions with respect to the terminus of an aliphatic carbon to carbon chain.

Among the alpha-beta olefinically unsaturated monomers which may be employed in such copolymers are acrylates (meaning esters of either acrylic or methacrylic acids) as well as mixtures of acrylates and vinyl hydrocarbons. Preferably, in excess of 50 weight percent of the total of the copolymer monomers are esters of $C_1$—$C_{12}$ monohydric alcohols and crylic or methacrylic acids, e.g., methylmethacrylate, 2-ethylhexylacrylate and laurylmethacrylate. Among the monovinyl hydrocarbons suitable for use in forming the copolymers are those containing 8 to 12 carbon atoms and including styrene, alpha methylstyrene, vinyl toluene, t-butylstyrene and chlorostyrene. When such monovinyl hydrocarbons are employed, they should constitute less than 50 weight percent of the copolymer. Other monomers such as vinyl chloride, acrylonitrile, methacrylonitrile, and vinyl acetate may be included in the copolymer as modifying monomers. However, when employed, these modifying monomers should constitute only from 0 to 30 weight percent of the monomers in the copolymer.

As mentioned above, the film forming material may contain both hydroxy functionality and a material which reacts in situ to form hydroxy functionality. Examplary of one such film forming material would be a material which consists essentially of a single copolymer bearing both hydroxy and epoxy functionality, the epoxy functionality reacting with the acid functionality of the hydroxy functional organophosphate ester as discussed above to form hydroxy functionality which thereafter may also react with the amino crosslinking agent. Such a difunctional copolymer may be of the acrylic type similar to the hydroxy functional copolymer discussed above. A preferred bifunctional copolymer of this type has a number average molecular weight ($\overline{M}_n$) of from 1500 to 10,000 and a glass transition temperature (Tg) of from −25°C to 70°C. Such a copolymer preferably is formed from 5 to 25 weight percent of monoethylenically unsaturated monomers bearing glycidyl functionality and from 5 to 25 weight percent of monoethylenically unsaturated monomers bearing hydroxyl functionality, with the total of the monoethylenically unsaturated monomers bearing either said glycidyl functionality or said hydroxy functionality being not greater than 30 weight percent of the monomers in the copolymer. The monoethylenically unsaturated monomers bearing glycidyl functionality may be either glycidyl ethers or glycidyl esters. Preferably, however, the epoxy functional monomers are glycidyl esters of monoethylenically, unsaturated carboxylic acids. Examples are glycidyl acrylates and glycidyl methacrylates. The remainder of the monomers in the copolymer, i.e., from 90 to 70 weight percent, consist of other monoethylenically unsaturated monomers, such as those described above.

Also as mentioned above, the film forming material may consist essentially of a compound which reacts in situ to form hydroxy functionality, i.e., a compound not initially including hydroxy functionality. It is possible to form all the hydroxy functionality from such a compound. Such a compound could be, for example, a copolymer such as those described above, but bearing only glycidyl functionality. Such a copolymer bearing pendent functionality would have a number average molecular weight ($\overline{M}_n$) of from 1500 to 10,000, preferably from 2,000 to 6,000, and a glass transition temperature (Tg) of from −25°C to 70°C, preferably from −10°C to 50°C. A preferred copolymer of this type consists of from 10 to 30 weight percent of monoethylenically unsaturated monomers bearing

glycidyl functionality and from 90 to 70 weight percent of other monoethylenically unsaturated monomers, as discussed above.

Still another compound bearing epoxy functionality which may be employed when solely epoxy functionality, which in turn will react with the acid functionality of the organophosphate ester to form hydroxy functionality, is desired is a polyepoxide resin having a number average molecular weight of from 140 to 3,000, preferably from 300 to 2,000. The term polyepoxide resin as used herein means epoxide compounds or polymers containing two or more epoxide groups. Such polyepoxide resins could be selected from aliphatic, cycloaliphatic and aromatic polyepoxides falling within the stated molecular weight range. Such polyepoxides are well known compositions and any of these may be employed. Among the many suitable types of polyepoxides are those disclosed by US—A 3,404,018; 2,528,359; 2,528,360; 3,198,850; 3,960,979; and 4,018,848.

US—A 3,404,018 discloses several particularly suitable types of polyepoxides including: (1) polyglycidyl ethers of polyhydric alcohols and polyhydric phenols; (2) epoxidized esters of polyethylenically unsaturated monocarboxylic acids; (3) glycidyl esters of polybasic acids; (4) epoxidized esters of unsaturated monohydric alcohols and polycarboxylic acids; and (5) epoxidized polymers and copolymers of diolefins. Many polyepoxides other than those recited in this or other referenced patents will be apparent to those skilled in the art.

As also mentioned above, there may be those instances when the film forming material desirably comprises separate compounds, one or more bearing hydroxy functionality and one or more others bearing functionality which reacts in situ to form hydroxy functionality. Such film forming materials might, for example, consist of the above noted hydroxy functional copolymer combined with the epoxy functional copolymer discussed above or the polyepoxide resin discussed above. Various other combinations of materials, of course, will be apparent to those skilled in the art. Still other film forming materials are exemplified in the detailed examples set forth hereinafter.

## Amino Crosslinking Agent

Amino crosslinking agent suitable for crosslinking hydroxy functional bearing materials are well known in the art and their selection will be obvious to those skilled in the art. Typically, the crosslinking materials are products of reactions of melamine or urea with formaldehyde and various alcohols containing up to and including 4 carbon atoms. Among the numerous materials which may be employed are the amine aldehyde resins such as condensation products of formaldehyde with melamine, substituted melamine, urea, benzoguanamine or substituted benzoguanamine. Preferred members of this class are methylated melamine-formaldehyde resins such as hexamethoxymethylmelamine. These liquid crosslinking agents have substantially one hundred percent (100%) nonvolatile content as measured by the foil method at 45°C for 45 minutes. Some particularly well known crosslinking agents are the amino resins sold by American Cyanamid under the trademark "Cymel". In particular, Cymel 301, Cymel 303, and Cymel 1156, which are alkylated melamine-formaldehyde resins are useful in compositions falling within the scope of this invention.

Of course, the amount of crosslinking agent employed in any given composition is a matter of choice depending upon the final properties desired and the nature of the other materials in the coating composition.

## Preferred High Solids Coating Compositions

As indicated above, the high solids coating compositions within the scope of the invention include a film-forming resin bearing epoxy functionality or both epoxy and hydroxy functionality. Materials suitable for use in preparing the high solids compositions of the invention are the acrylic copolymers bearing glycidyl functionality or glycidyl and hydroxy functionality and the polyepoxide resins, all of which are described hereinbefore.

In addition to the film-forming resin and the oligomeric organophosphosphate ester the compositions also include an amino crosslinking agent generally described above and an optional hydroxy functional additive in an amount up to 45 weight percent of the total of the four major components of the composition. The hydroxy functional additives provide additional hydroxy functionality so as to provide a more intimate crosslinked structure in the final cured product. These additives are typically selected from various polyols having a number average molecular weight ($\bar{M}_n$) of from 150 to 6,000, preferably from 400 to 2,500. As used herein the term polyol means a compound having two or more hydroxyl groups.

The polyols useful for the preferred high solids compositions of the invention preferably are selected from the group consisting of: (i) hydroxy functional polyesters; (ii) hydroxy functional polyethers; (iii) hydroxy functional oligoesters; (iv) monomeric polyols; (v) hydroxy functional copolymers produced by free radical polymerization of monoethylenically unsaturated monomers, one of which bears hydroxy functionality and which is included in the copolymer in an amount ranging from 2.5 to 30 weight percent of the copolymer and (vi) mixtures of (i)—(v).

The hydroxy functional polyesters useful in these preferred compositions are preferably fully saturated products prepared from aliphatic dibasic acids containing 2—20 carbon atoms, such as succinic acid, glutaric acid, adipic acid and azelaic acid, and short chain glycols of up to and including

21 carbon atoms, such as ethylene glycol, 1,2-propylene glycol, 1,3-propylene glycol, 1,2-butylene glycol, 1,3-butylene glycol, 1,4-butylene glycol, neopentyl glycol, 1,4-cyclohexane dimethylol, 1,6-hexamethylene glycol and 2-ethyl-2-methyl-1,3 propane diol. The molecular weight of these materials ranges from 200 to 2,500 and the hydroxyl number ranges from 30 to 230. The hydroxyl number is defined as the number of milligrams of potassium hydroxide needed for each gram of sample to neutralize the acetic acid generated during the reaction between the polyol and the excess acetic anhydride. The polyester polyols utilized in the compositions are low melting, soft waxy solids which are easily maintained in the molten state.

Among preferred polyesters are products derived from the esterification of ethylene glycol and 1,4 butane diol with adipic acid, ethylene glycol and 1,2 propylene glycol with adipic acid, azelaic acid and sebacic acid copolyester diols, and mixtures thereof.

Among useful polyether diols are polytetramethylene ether glycol, polyethylene glycol, polypropylene glycol and the like.

The hydroxy functional oligoesters useful as hydroxy functional additives in the compositions of the invention are oligoesters preferably having a molecular weight of from 150 to 3,000. Included in this class of materials are the di- or trihydroxy oligoesters described above for use in preparing the oligomeric hydroxy phosphate ester catalysts of the invention. Similar oligoester with molecular weights greater than the 150 limit of those oligoesters up to the 3,000 limit specified above as well as similarly prepared oligoesters bearing more than three hydroxyl groups may be employed.

Among the numerous monomeric polyols which may be employed as the hydroxy functional additive are the various short chain glycols of up to and including 21 carbon atoms which are useful in preparing the hydroxy functional polyesters discussed above. Other conventional polyhydric alcohols such as glycerols and sugar alcohols are also among the numerous monomeric polyols which will be apparent to those skilled in the art.

The hydroxy bearing copolymer described above for use as a film-forming material for compositions of the invention, in general may also be used as a hydroxy-functional additive in the preferred high solids coating compositions of the invention.

It is the reactive nature of the oligomeric hydroxy-functional organophosphate ester component which allows the composition to cure rapidly at a low temperature. As indicated generally above, the acid functionality of the mono- or diester or mixture of such esters reacts with the epoxy functionality of the epoxy functional film-former to form an ester and a hydroxyl group. This hydroxyl group, as well as the organic hydroxyl groups on the oligomeric hydroxy functional organophosphate ester, any hydroxyl groups in the film-former in addition to the epoxy functionality and any optional hydroxy groups included in the composition in the form of hydroxy functional additive, crosslinks with the amino resin crosslinking agent. It is critical to achieving the desired results of the high solids coating compositions of this invention, i.e., in making them suitable for use as automotive topcoats, that the amount of oligomeric organophosphate ester be sufficient to convert substantially all of the epoxy functionality on the film-former to the desired hydroxy functionality by esterification reaction. Therefore, the organophosphate ester is included in the composition in an amount sufficient to provide from 0.8 to 1.5 equivalents, preferably from 0.9 to 1.2 equivalents, of acid functionality for each equivalent of pendent epoxy functionality on the copolymer. As will be noted from the equivalent amounts of epoxy and organophosphate ester acid functionality stated above, the amount of acid functionality need not be in stoichiometric amounts to the epoxy functionality. This is because of the fact that during curing of the high solids coating composition, residual water present in the composition hydrolyzes some of the esterified product back to acid and this hydrolyzed product then, in turn, reacts with additional epoxy functionality.

As also indicated above, the amino resin materials function as a crosslinking agent by reacting with hydroxy functionality present in the composition. In the preferred high solids compositions of the invention this hydroxy functionality may be present (i) in an organic hydroxyl group on the oligomeric hydroxy functional organophosphate ester, (ii) as a hydroxyl group on the film-former in those cases where that component bears hydroxy as well as epoxy functionality; (iii) as a hydroxyl group on the optional hydroxy functional additive or (iv) as a result of esterification of the epoxy functionality of the film-former.

In order to achieve the outstanding properties which makes these preferred high solids coating compositions particularly useful as automotive topcoat materials, it is essential that the amount of amino crosslinking agent be sufficient to substantially completely crosslink the hydroxy functionality in the coating composition. Therefore, the amino resin crosslinking agent should be included in the composition in an amount sufficient to provide at least .4 equivalents, preferably from .6 to 2.1 equivalents, of nitrogen crosslinking functionality for each equivalent of hydroxy functionality included in the composition.

Other Materials

Of course, it should be recognized that coating compositions within the scope of this invention including the preferred high solids compositions may include other conventional components. These include, but are not limited to, antioxidants, U.V. absorbers, solvents, surface modifiers, wetting agents,

pigments and fillers.

The invention will be further understood by referring to the following detailed examples. It should be understood that the specific examples are presented by way of illustration and not by way of limitation. Unless otherwise specified, all references to "parts" are intended to mean parts by weight. The words "Araldite", "Cellosolve", "Cordova", "Cymel", "Acryloid", "Beetle" and "Desmophen" are Trade Marks.

Example 1

(a) 941 grams of azelaic acid are heated to melt in a three-necked flask equipped with a stirring rod, dropping funnel and a condenser. Sixteen grams of a chromium-based catalyst for carboxylic acid-epoxy reactions sold under the trade name Cordova Accelerator (AMC-2) are added to the above melt and 725 grams of propylene oxide are added dropwise with continuous stirring; ice-cold water is continuously circulated through the condenser. After the addition is complete, the reaction mixture is heated for half an hour and then a slight vacuum is applied to remove any excess of propylene oxide.

Five hundred (500) grams of the above ester, bis-(hydroxypropyl) azelate, are placed under nitrogen in a three-necked flask and powdered phosphorus pentoxide is added to it with continuous stirring. An exothermic reaction occurs; the addition of $P_2O_5$ is regulated to maintain the temperature at 50—55°C. The addition of $P_2O_5$ is continued until the acid equivalent weight of the reaction mixture has reached 430. The reaction mixture is allowed to stay overnight and is titrated with KOH next morning to obtain an acid equivalent weight of 398.

(b) A hydroxy acrylic copolymer is prepared from the following monomers:

| | Wt./Grams | Wt. % |
|---|---|---|
| Hydroxyethyl acrylate | 400 | 20 |
| Methylmethacrylate | 400 | 20 |
| Styrene | 200 | 10 |
| Butylmethacrylate | 1000 | 50 |

One hundred (100) grams tert-butyl perbenzoate is added to the above monomer mixture and the resulting solution added dropwise over a period of two hours to 1600 grams of refluxing (145°) methyl amyl ketone (under nitrogen). The heating and stirring is continued for half an hour after the addition is complete and then five (5) grams of tert-butyl perbenzoate are added portionwise to the reaction mixture. The reaction mixture is refluxed for an additional ninety minutes and then allowed to cool to room temperature. The molecular weight is determined by Gel Permeation Chromatography: $\overline{M}_n = 2540$, $\overline{M}_w/\overline{M}_n = 1.94$.

Calculated $T_g = 27°C$

theoretical solids = 60%

Determined solids = 59.2%

Viscosity, #4 Ford Cup = 44 Sec.

Hydroxy equivalent weight = 980

One hundred fifty (150) parts of the above polymer solution and 40 parts of Cymel 301 (American Cyanamid) are dissolved in 30 parts of butyl acetate and fifteen (15) parts of hydroxyphosphate reaction product from (a) are added to it. The resulting formulation is spray applied to primed steel panels in three coats; the panels are baked at 130°C for 20 minutes to obtain clear coatings with excellent hardness, adhesion and solvent (xylene and methyl ethyl ketone) resistance.

Example 2

Ninety (90) parts of the polymer solution from Example 1(b) are mixed with 20 parts of bis-(3,4-epoxy-6-methycylcohexanemethyl) adipate (Araldite CY 178 from Ciba-Geigy) and 31 parts of hexamethoxymethyl melamine (Cymel 301, American Cyanamid). The above mixture is dissolved in 12 parts of cellosolve acetate and a solution of 37.9 parts of oligomeric hydroxyphosphate reaction product from Example 1(a) in 15 parts of butyl acetate is added to it. The resulting mixture is stirred for one minute and then spray applied to primed panels in three coats with intermediate flash of one minute and a final flash of five minutes. The panels are baked at 130°C for 20 minutes to obtain clear coatings with excellent hardness, adhesion and solvent (methyl ethyl ketone and xylene) resistance.

Example 3

An acrylic copolymer is prepared from the following monomers:

| | Parts by Weight |
|---|---|
| Butyl methacrylate | 26 |
| Ethylhexyl acrylate | 20 |
| Hydroxyethyl acrylate | 30 |
| Styrene | 24 |

The preparation is carried out in the same way as outlined in Example 1(b) by using cellosolve acetate as the solvent and tert-butyl peroctoate (5% of monomers) as an initiator to obtain a 70% solution of the polymer. The calculated Tg is −7°C and the molecular weight from Gel Permeation Chromatography is $\overline{M}_n = 3070$ and $\overline{M}_w/\overline{M}_n = 2.2$.

Twenty (20) parts of the above polymer solution are mixed with 12.5 parts of Araldite CY 178, 19 parts of Cymel 301 and five parts of butyl acetate. 23.7 parts of hydroxy phosphate reaction product, described in Example 1(a), are added to the above solution and the resulting formulation spray applied to primed steel panels. The panels are baked at 130°C for 25 minutes to obtain a coating with excellent gloss, hardness, adhesion and solvent (xylene and methyl ethyl ketone) resistance.

Example 4

Three hundred fifty (350) parts of $TiO_2$ are mixed with 350 parts of an hydroxy functional polyacrylate having a molecular weight ($\overline{M}w$) of about 800 sold under the trade name Acryloid OL-42 (Rohm & Haas Chem. Co.) and 25 parts of n-butyl acetate. The above mixture is taken up in a porcelain bottle containing porcelain beads and put on a roller mill for 16 hours. Thirty-one (31) parts of this mill base are mixed with 10 parts of hydroxy-functional polyester having a molecular weight ($\overline{M}w$) of from 500 to 600 sold under the trade name Desmophen KL5-2330 (Rohm & Haas Chem. Co.), 10 parts of 1,4-butanediol diglycidyl ether and 21 parts of Cymel 301. In a separate flask 5 parts of Desmophen KL5-2330 are mixed with 20.5 parts of hydroxy phosphate reaction product (Example 1(a)). The above two solutions are mixed together and the resulting formulation sprayed on primed panels in a four coat application with an intermediate flash of 1.25 minutes. After 5 minutes final flash the panels are baked at 130°C for 20 minutes to obtain a coating with excellent xylene and methyl ethyl ketone resistance. The solids by weight are determined (130°C/30 min) to be 75%.

Example 5

524 grams of bis-(hydroxypropyl) adipate are prepared from adipic acid and propylene oxide by following the method described for bis-(hydroxypropyl) azelate in Example 1(a). Hydroxyphosphate reaction product with acid equivalent weight of 315 is prepared from this dihydroxy ester as described in Example 1(a).

Fifty (50) parts of Phthalo Blue pigment are mixed with 500 parts of Acryloid OL-42 and 44 parts of n-butyl acetate and the mill base is ground as described in Example 5.

(a) Twenty-five (25) parts of the above mill base are mixed with 29 parts of Acryloid OL-42, 15 parts of 1,4-butanediol diglycidyl ether, 39 parts of Cymel 301, 5 parts of aluminum flakes (65% in naphtha) and 10 parts of n-butyl acetate.

(b) Twenty (20) parts of Acryloid OL-42 are mixed with 25.4 parts of the hydroxy phosphate reaction product (eq. wt. 315) described above.

Components (a) and (b) are mixed and the resulting formulation sprayed on primed panels in three coats with one minute flash times between coats. After seven minutes final flash the panels are baked at 130°C for 20 minutes to obtain blue metallic coatings with excellent hardness, adhesion and solvent resistance.

Example 6

In a round-bottom four-necked flask, equipped with a stirrer, a dropping funnel, a thermometer and a condenser, 500 ml of methyl amyl ketone is brought to reflux under nitrogen. The following mixture of monomers is employed for polymer synthesis:

| | Wt./Grams | Wt. % |
|---|---|---|
| Butyl methacrylate | 127.5 | 17 |
| Ethylhexyl acrylate | 180 | 24 |
| Glycidyl methacrylate | 195 | 26 |
| Methyl methacrylate | 210 | 28 |
| Styrene | 37.5 | 5 |

Thirty-seven (37) grams of tert-butyl perbenzoate is added to the above monomers and the resulting solution added dropwise to refluxing methyl amyl ketone over a period of one hour and ten minutes. The heating and stirring is continued for half an hour after the addition is complete and then two more grams, t-butyl perbenzoate are added portionwise. The reaction mixture is refluxed for two more hours and then allowed to cool to room temperature. The molecular weight of the copolymer is determined by Gel Permeation Chromatography and found to be $\overline{M}_n = 3250$ and $\overline{M}w/\overline{M}_n = 2.2$. The calculated Tg of the polymer is 9°C and the solution viscosity (#4 Ford cup) is 41 seconds.

Ninety (90) parts of the copolymer solution and 47 parts of Cymel 301 are dissolved in 20 parts of butyl acetate and 39.4 parts of the hydroxy phosphate reaction product from Example 1(a) are added to this solution. The resulting formulation is spray applied to steel test panels and the panels are baked at 130°C for 20 minutes to obtain a coating with excellent hardness, adhesion and solvent (xylene and methyl ethyl ketone) resistance.

Example 7

Five (5) parts of aluminum flakes (65% in naphtha) are mixed well with 80 parts of the copolymer solution from Example 6. Thirty-nine (39) parts Cymel 301 and 30 parts of butyl acetate are added to the above mixture and the resulting material is filtered through a filtering cloth. 37.1 parts of hydroxy phosphate reaction product from Example 1(a) are added to the filtrate and the resulting formulation spray applied to primed steel test panels in a three coat application. The intermediate flash time is one minute and the final flash is five minutes. The panels are baked at 130°C for 20 minutes to obtain a silver metallic coating with excellent hardness, adhesion and solvent (xylene and methyl ethyl ketone) resistance.

Example 8

The following monomers are utilized in the synthesis of a glycidyl methacrylate polymer.

| | Wt./Grams | Wt. % |
|---|---|---|
| Butyl methacrylate | 120 | 16 |
| Ethylhexyl acrylate | 142.5 | 19 |
| Glycidyl methacrylate | 195 | 26 |
| Methyl methacrylate | 255 | 34 |
| Styrene | 37.5 | 5 |

The polymerization is carried out as outlined in Example 6 by employing 500 grams of methyl amyl ketone and 30 grams of tert-butyl perbenzoate. The addition of initiator and the monomer mixture is complete in two hours and the reaction mixture refluxed for one addition hour. Two grams of initiator are then added and the reaction mixture refluxed for two hours. The molecular weight determined by Gel Permeation Chromatography is found to be $\overline{M}_n = 3168$ and $\overline{M}w/\overline{M}_n = 2.15$. The Tg of this polymer is calculated to be 20°C.

Thirty-two (32) parts of the above polymer solution, fifteen (15) parts of hexamethoxymethyl melamine (Cymel 301) and two parts of 1,4-Cyclohexanedimethanol are dissolved in ten parts of butyl acetate. 14.6 parts of hydroxyphosphate reaction product from Example 1(a) are added to the above solution and the resulting formulation spray applied to primed steel panels; the panels are baked at 130°C for 20 minutes to obtain a coating with excellent physical properties.

Example 9

(a) By following the procedure described in Example 1(a), 586 grams of a mixture of bis-(hydroxypropyl) azelate and bis-(hydroxypropyl) terephthalate are prepared from 188 grams of azelaic acid and 166 grams of terephthalic acid. Hydroxyphosphate reaction product with acid equivalent weight of 337

is prepared from the above ester mixture as described in Example 1(a).

(b) The following mixture of monomers is used in the polymer synthesis:

| | Wt. % |
|---|---|
| Butyl methacrylate | 25 |
| Glycidyl acrylate | 30 |
| Methyl methacrylate | 40 |
| Styrene | 5 |

The polymerization is carried out as outlined in Example 1 to obtain a 50% solution of the polymer.

Seventy (70) parts of the above polymer solution, 15 parts of bis-(hydroxypropyl) azelate from Example 1 and 45 parts of hexamethoxymethyl melamine (Cymel 301) are dissolved in 10 parts of butyl acetate. 24.9 parts of hydroxyphosphate reaction product from (a) are added to the above solution and the resulting formulation spray applied to primed steel panels. The panels are baked at 130°C for 15 minutes to obtain coatings with excellent adhesion, hardness and solvent (xylene and methyl ethyl ketone) resistance.

### Example 10

In the composition described in Example 1, 45 parts of Cymel 1156 are substituted for Cymel 301 used therein. The resulting formulation is applied by spraying to primed steel panels which are baked at 130°C for 15 minutes to obtain coatings with excellent adhesion, hardness and solvent (xylene and methyl ethyl ketone) resistance.

### Example 11

In the composition described in Example 9, 47 parts of alkoxymethylolbenzoguanamine (Cymel 1123) are substituted for Cymel 301 used therein. The resulting formulation is applied by spraying to primed steel panels which are baked at 130°C for 15 minutes to obtain coatings with excellent adhesion, hardness and solvent (xylene and methyl ethyl ketone) resistance.

### Example 12

One hundred grams of carboxyterminated polybutadiene resin (HYCAR CTBN 1300X8) are mixed with 100 grams of aliphatic epoxy Araldite CY-178 and 25 ml n-butyl acetate. Two grams of Cordova Accelerator AMC-2 are dissolved in 25 ml n-butyl acetate and are added to the reaction mixture. The contents of the flask are stirred to obtain a nearly homogeneous mixture and the reaction mixture is stirred at 50°C for 15 hours.

Three parts of the above mixture, seven parts of Araldite CY-178 and nine parts of Cymel 301 are dissolved in ten parts of n-butyl acetate. Thirteen parts of hydroxyphosphate reaction product from Example 1(a) are added to the above solution and the resulting formulation is spray applied on cold-rolled unpolished steel panels. The panels are baked at 145°C/30 minutes to obtain coatings with excellent hardness, adhesion and solvent resistance. A test panel is put in Cleveland Humidity Chamber for 17 days; very minimal loss of adhesion occurs.

### Example 13

In a three-necked, round bottom, two liter flask, equipped with a stirrer, a condenser and a dropping funnel, 750 ml of toluene is brought to reflux under nitrogen. The following mixture of monomers, containing 15 grams of 2,2'-azobis-(2-methyl propionitrile) dissolved in 50 ml acetone, is added dropwise to the refluxing toluene.

| | Wt./Gram | Wt. % |
|---|---|---|
| Butyl methacrylate | 150 | 50 |
| Glycidyl methacrylate | 45 | 15 |
| Hydroxypropyl methacrylate | 30 | 10 |
| Methyl methacrylate | 60 | 20 |
| Styrene | 15 | 5 |

The addition of the initiator and monomer solution is completed in three hours. The reaction mixture is refluxed for half an hour more and 10 ml of acetone solution of 2 grams of the above initiator is added dropwise and the reaction mixture refluxed for half an hour. Part of the solvent is distilled out to bring the solids content to 66% by weight.

Twenty (20) parts of this polymer solution are mixed with 9 parts of Cymel 301 and the mixture dissolved in ten (10) parts of butyl acetate. 6.6 parts of hydroxy phosphate reaction product from Example 1(a) is added to the above solution and the resulting formulation drawn on a steel test panel. The panel is baked at 125°C for 20 minutes to obtain a coating with excellent hardness, adhesion and solvent (xylene and methyl ethyl ketone) resistance.

Example 14

A copolymer is prepared by following the procedure described in Example 13 in methyl amyl ketone at 125°C and by using the following monomers:

| | |
|---|---|
| Butyl methacrylate | 50 |
| Ethylhexyl acrylate | 10 |
| Glycidyl methacrylate | 15 |
| Hydroxypropyl methacrylate | 10 |
| Methyl methacrylate | 10 |
| Styrene | 5 |

Tert-butyl peroctoate (5.25% of monomers) is used as initiator and determined solids content is 56.6% by weight. The calculated Tg of the copolymer is 25°C and the molecular weight from Gel Permeation Chromatography is found to be $\overline{M}_n = 4220$ and $\overline{M}_w/\overline{M}_n = 1.90$.

A millbase is prepared by dispensing titanium dioxide in the polymer (b) with a high speed Cowl's blade. The composition of the millbase is: 15% polymer (100% nonvolatile), 65% titanium dioxide and 20% methyl amyl ketone. Seventy-two (72) parts of this millbase, 31 parts of the polymer solution, 5 parts of bis-(hydroxypropyl) azelate, 29 parts of Cymel 301 and 21 parts of methyl amyl ketone are taken up in a plastic bottle. 9.5 parts of hydroxy phosphate (equivalent weight 315), described in 6, are added to the above mixture and the resulting formulation spray applied to both primed and unprimed steel panels. The panels are baked at 130°C for 20 minutes to obtain hard, glossy coatings with excellent adhesion. The coating has an excellent solvent and humidity resistance.

Example 15

By following the procedure described in Example 14, a copolymer is prepared from the following monomers:

| | Weight Percent |
|---|---|
| Butyl methacrylate | 60 |
| Glycidyl methacrylate | 20 |
| Hydroxyethyl acrylate | 10 |
| Styrene | 10 |

The calculated Tg of the polymer is 25°C and solids content is found to be 54.9% by weight. The molecular weight by Gel Permeation Chromatography is found to be $\overline{M}n = 1809$ and $\overline{M}W/\overline{M}n = 2.44$. As described in Example 15, a millbase is prepared from the following materials:

| | |
|---|---|
| Copolymer | 21% (100% nonvolatile) |
| Titanium dioxide | 61% |
| Methyl amyl ketone | 18% |

Sixty-five (65) parts of this millbase, 27 parts polymer, 5 parts bis-(hydroxy-propyl) azelate, 25 parts Cymel 301 and 20 parts of methyl amyl ketone are taken up in a plastic bottle. Hydroxy phosphate reaction product from Example 1(a) (equivalent weight 398), 17.9 parts, is added to the

above mixture and the resulting formulation spray applied to both primed and unprimed panels. The panels are baked at 130°C for 20 minutes to obtain hard coatings with excellent adhesion and solvent resistance.

Example 16

By following the procedure described in Example 13, a copolymer is prepared from the following monomers.

| | Weight Percent |
|---|---|
| Butyl methacrylate | 49 |
| Glycidyl methacrylate | 20 |
| Hydroxypropyl methacrylate | 10 |
| Methyl methacrylate | 16 |
| Styrene | 5 |

The calculated Tg of the copolymer is 43°C and solids content is found to be 52%. The molecular weight, by Gel Permeation Chromatography, is found to be $\overline{M}n = 2904$ and $\overline{M}w/\overline{M}n = 2.31$.

One hundred parts of the above polymer solution are mixed with 5.5 parts of aluminum flakes (65% in naphtha), 31 parts of Cymel 301 and 10 parts of butyl acetate. Thirty parts of hydroxyphosphate reaction product from Example 1(a) are added to the above mixture and the resulting formulation is applied by spraying in three coats to primed panels. The panels are baked at 120°C to obtain silver metallic coating with excellent hardness, adhesion and solvent (xylene and methyl ethyl ketone) resistance.

Example 17

By following the procedure described in Example 13, a copolymer is prepared in refluxing methyl amyl ketone from the following monomers:

| | Weight Percent |
|---|---|
| Glycidyl methacrylate | 20 |
| Hydroxyethyl acrylate | 10 |
| Butyl methacrylate | 60 |
| Styrene | 10 |

Two percent tert-butyl peroctoate is used as initiator; the solids content is found to be 53.6%. From Gel Permeation Chromatography the molecular weight of the polymer is found to be: $\overline{M}n = 2746$ and $\overline{M}w/\overline{M}n = 2.33$.

As described in Example 14, a millbase is prepared with the following ingredients:

| | Weight Percent |
|---|---|
| Titanium dioxide | 56 |
| The above polymer | 26 (100% nonvolatile) |
| Methyl amyl ketone | 18 |

Seventy-one (71) parts of this millbase, 15 parts polymer, 7 parts bis-(hydroxypropyl) azelate, 27 parts Cymel 301, 25 parts methyl amyl ketone and 16.4 parts hydroxyphosphate reaction product (equivalent weight 398) from Example 1(a) are mixed in a plastic container. This formulation is spray applied to primed test panels. The panels are baked at 130°C for 20 minutes to obtain glossy, hard coatings with excellent solvent (xylene and methyl ethyl ketone) resistance. The coatings do not show any loss of gloss, adhesion or solvent resistance upon exposure in a Cleveland Humidity Chamber for 14 days.

Example 18

By following the procedure described in Example 13, a copolymer is prepared in refluxing toluene from the following monomers:

| | Weight Percent |
|---|---|
| Butyl methacrylate | 50 |
| Ethylhexyl acrylate | 20 |
| Glycidyl methacrylate | 15 |
| Hydroxypropyl methacrylate | 10 |
| Styrene | 5 |

One thousand grams of the total monomers and 700 ml toluene and 50 grams tert-butyl peroctoate are used. The calculated Tg of this polymer is 6°C and solid content is found to be 59% by weight; a Gel Permeation Chromatogram shows its molecular weight to be: $\overline{M}n = 4337$ and $\overline{M}w/\overline{M}n = 2.14$. Viscosity of this polymer solution is $133 \times 10^{-6}$ $m^2/S$ (1.33 Stokes).

Fifty parts of this polymer solution, 21 parts of Cymel 301, 10.55 parts of hydroxy phosphate reaction product from Example 10 are dissolved in 12 parts of n-butyl acetate. This formulation is spray applied in three coats to primed steel panels which are baked at 130°C for 20 minutes to obtain coatings with excellent physical properties.

Example 19

Two hundred grams of azelaic acid, 165 grams of 1,4-cyclohexanedicarboxylic acid and 100 grams of butyl acetate are placed in three-necked flask and treatment with 290 grams of propylene oxide is carried out as described in Example 1(a). The resulting ester solution is treated with $P_2O_5$ (Example 1) to obtain hydroxyphosphate solution with acid equivalent weight of 511.

Twenty (20) parts of the polymer solution from Example 2 are mixed with 18 parts of Araldite CY178, 38 parts of glycoluril resin (Cymel 1170) and 7 parts of butyl acetate. The hydroxyphosphate reaction product described above, 43.8 parts, is added to the above solution and the resulting formulation applied by spraying to primed steel test panels. The panels are baked at 130°C for 20 minutes to obtain a coating with excellent hardness, adhesion and solvent (xylene and methyl ethyl ketone) resistance.

Example 20

Five hundred grams of caprolactone based oligodiol (mol. wt. 530, PCP-0200, Union Carbide) is treated with $P_2O_5$, as described in Example 1(a), to obtain a hydroxyphosphate reaction product with acid equivalent weight of 762.

Twenty-five (25) parts of cycloaliphatic epoxy Araldite CY178 (CibaGeigy) and 6e parts of urea resin (Beetle 80) are dissolved in 25 parts of n-butyl acetate and 91 parts of the above hydroxyphosphate reaction product are added to this solution. The resulting formulation is applied by spraying in three coats to primed steel panels which are baked at 130°C for 30 minutes to obtain coating with excellent hardness, adhesion and solvent (xylene and methyl ethyl ketone) resistance.

Example 21

In this formulation, components described in Example 14 are employed in exact quantities as described therein except that 39 parts of butoxymethyl glycoluril (Cymel 1170) are used as the crosslinking agent instead of Cymel 301. The formulation is applied by spraying to primed steel panels and baked at 130°C for 20 minutes to obtain hard, glossy coatings with excellent adhesion and solvent (xylene and methyl ethyl ketone) resistance.

Example 22

(a) Two grams of Cordova Accelerator (AMC-2) is mixed with 155 grams of vinylcyclohexane dioxide and this mixture is added dropwise to 120 grams of refluxing acetic acid. After the addition is complete, the reaction mixture is stirred at 100°C for one hour and then is allowed to cool to room temperature. The resulting ester is treated with $P_2O_5$, as described in Example 1(a), to obtain a hydroxyphosphate reaction product with an acid equivalent weight of 336.

(b) A copolymer is prepared from the following monomers by following the procedure described in Example 1(b).

| | Weight Percent |
|---|---|
| Butyl methacrylate | 50 |
| Ethylhexyl acrylate | 10 |
| Glycidyl methacrylate | 15 |
| Hydroxypropyl methacrylate | 10 |
| Methyl methacrylate | 10 |
| Styrene | 5 |

Toluene is used as solvent to obtain a 60% solution of the polymer; tert-butyl peroctoate (3.7% of monomers) is used as an initiator. Toluene (60%) is distilled off and butyl acetate is added to bring the solids level to 60% by weight. The calculated Tg of the polymer is 25°C and the molecular weight by Gel Permeation Chromatography is found to be $\overline{M}n = 5301$, $\overline{M}w/\overline{M}n = 2.9$.

Three hundred (300) parts of this polymer solution are mixed well with 11.2 parts of aluminum flakes (65% in naphtha), 3.2 parts of zinc naphthanate, and 97 parts of hexamethoxymethyl melamine (Cymel 301) are added to this mixture. 64 parts of the hydroxyphosphate reaction product from (a) are dissolved in 50 ml of cellosolve acetate; this solution is added to the above mixture and the resulting formulation applied by spraying to primed steel panels in three coats. The panels are baked at 130°C for 20 minutes to obtain silver metallic coatings with excellent physical properties.

Example 23

524 grams of bis-(hydroxypropyl) adipate are prepared from adipic acid and propylene oxide by following the method described for bis-(hydroxypropyl) azelate in Example 1(a). Hydroxy phosphate with acid equivalent weight of 315 is prepared from this dihydroxy ester as described in Example 1(a).

Eighty (80) parts of the polymer solution prepared in Example 6, 10 parts of bis-(hydroxypropyl) azelate from Example 1(a) and 35 parts of ethoxy methoxymethylbenzoguanamine (Cymel 1123, American Cyanamid) are dissolved in 25 parts of butyl acetate and 27.8 parts of hydroxyphosphate reaction product described above added to it. The resulting formulation is spray applied to primed steel panels and baked at 130°C for 20 minutes to obtain hard, glossy coatings with excellent adhesion and solvent resistance.

Example 24

A hydroxy acrylic copolymer is prepared from the following monomers:

| | Wt./Grams | Wt. % |
|---|---|---|
| Butyl methacrylate | 1000 | 50 |
| Hydroxyethyl acrylate | 400 | 20 |
| Methyl methacrylate | 400 | 20 |
| Styrene | 200 | 10 |

One hundred (100) grams tert-butyl perbenzoate is added to the above monomer mixture and the resulting solution added dropwise over a period of two hours to 1400 grams of refluxing methyl amyl ketone under nitrogen. The heating and stirring is continued for half an hour after the addition is complete and then five grams of tert-butyl perbenzoate are added portionwise to the reaction mixture. The reaction mixture is refluxed for an additional ninety (90) minutes and then allowed to cool to room temperature. The molecular weight is determined by Gel Permeation Chromatography $\overline{M}_n = 2540$ and $\overline{M}w/\overline{M}_n = 1.94$.

Forty (40) parts of the above polymer solution, 45 parts by weight of the glycidyl methacrylate polymer from Example 6 and 37 parts of hexamethoxymethyl melamine (Cymel 301) are dissolved in 20 parts of butyl acetate. 19.8 parts of hydroxyphosphate reaction product from Example 1(a) is added to the above solution and the resulting formulation spray applied to primed steel test panels. The panels are baked at 130°C for 20 minutes to obtain coatings with excellent hardness, adhesion and solvent (xylene and methyl ethyl ketone) resistance.

Example 25

Two hundred grams of azelaic acid, 165 grams of 1,4-cyclohexanedicarboxylic acid and 100

grams of butyl acetate are placed in a three-necked flask and treated with 290 grams of propylene oxide as described in Example 1(a). The resulting ester solution is treated with $P_2O_5$ (Example 1) to obtain hydroxyphosphate solution with acid equivalent weight of 511.

Three hundred fifty (350) grams of titanium dioxide are mixed with 350 parts of Acryloid OL-42 (Rohm & Haas Chem. Co.) and 25 parts of butyl acetate. The above mixture is taken up in a porcelain bottle containing porcelain beads and is put on a roller mill for 16 hours. Forty (40) parts of the above millbase are mixed with 28 parts of polymer from Example 6, 5 parts of hydroxy ester Desmophen KL5-2330 (Rohm and Haas Chem. Co.), 18 parts of hexamethoxymethyl melamine (Cymel 301) and 20 parts of butyl acetate. 16.2 parts of the above hydroxyphosphate reaction product are added to this mixture and the resulting formulation spray applied to primed steel panels. The panels are baked at 130°C for 20 minutes to obtain coatings with excellent physical properties.

Example 26

Ten (10) parts of Acryloid OL-42 (Rohm & Haas Chem. Co.), 5 parts of Araldite CY178, 2 parts of bis-(hydroxy-propyl) azelate and 15 parts of butoxymethyl urea resin (Beetle 80, American Cyanamid) are dissolved in 4 parts of butyl acetate. Hydroxy phosphate reaction product from Example 1(a), 9.6 parts is added to the above mixture and the resulting formulation drawn on steel test panels. The panels are baked at 130°C for 20 minutes to obtain clear coatings with excellent hardness, adhesion and solvent (xylene and methyl ethyl ketone) resistance.

Example 27

Two hundred grams of azelaic acid, 165 grams of 1,4-cyclohexanedicarboxylic acid and 100 grams of butyl acetate are placed in three-necked flask and treatment with 290 grams of propylene oxide is carried out as described in Example 1(a). The resulting ester solution is treated with $P_2O_5$ (Example 1) to obtain hydroxyphosphate reaction product solution with acid equivalent weight of 511.

Twenty (20) parts of the polymer solution from Example 3 are mixed with 18 parts of Araldite CY178, 28 parts of Cymel 301 and 7 parts of butyl acetate. The hydroxy phosphate reaction product described above, 43.8 parts, is added to the above solution and the resulting formulation applied by spraying to primed steel test panels. The panels are baked at 130°C for 20 minutes to obtain a coating with excellent hardness, adhesion and solvent (xylene and methyl ethyl ketone) resistance.

**Claims**

1. A coating composition comprising a film-forming component and an amino compound, which composition cures by reaction between said amino compound and hydroxy functionality present in said film-forming component characterised in that the composition includes at least one hydroxy functional organophosphate ester having the formula:

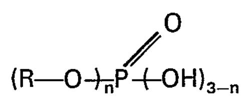

wherein n = 1 to 2 and the or each group R is independently selected from mono- and dihydroxy radicals containing one or more ester linkages and having a molecular weight of from 120 to 1500.

2. A composition in accordance with Claim 1 wherein said film-forming component has a number average molecular weight of at least 150.

3. A composition in accordance with Claim 1 or Claim 2 wherein said film-forming component comprises a compound bearing hydroxy functionality.

4. A coating composition in accordance with any one of Claims 1 to 3 wherein said film-forming component comprises a compound which reacts *in situ* during cure of said composition to form hydroxy functionality.

5. A coating composition in accordance with Claim 4 wherein the reaction *in situ* forms all of the hydroxy functionality in the film-forming material.

6. A coating composition in accordance with Claim 4 wherein said film forming component includes hydroxy functionality in addition to that which is formed by said reaction *in situ*.

7. A coating composition in accordance with any one of Claims 4 to 6 wherein said compound bears epoxy functionality which reacts with said ester during cure of said composition to form hydroxy functionality.

8. A coating composition in accordance with any one of Claims 1 to 7 wherein said film forming material comprises a compound bearing both epoxy and hydroxy functionality.

9. A coating composition in accordance with any one of Claims 1 to 7 wherein said film forming component comprises a mixture of a compound bearing hydroxy functionality and a compound bearing epoxy functionality.

10. A coating composition in accordance with any one of Claims 1 to 9 wherein R is a mono- or dihydroxy alkyl, cycloalkyl or aryl radical.

11. A coating composition in accordance with any one of Claims 1 to 10 wherein said oligomeric hydroxy functional organophosphate ester is a monoester.

12. A coating composition in accordance with any one of Claims 1 to 10 wherein said oligomeric hydroxy functional organophosphate ester is a diester.

13. A coating composition in accordance with any one of Claims 1 to 10 wherein said oligomeric hydroxy functional organophosphate ester is a mixture of mono- and diesters.

14. A coating composition in accordance with any one of Claims 1 to 13 wherein said oligomeric hydroxy functional organophosphate ester is the reaction product of a di- or trihydroxy oligoester and phosphorus pentoxide.

15. A coating composition in accordance with any one of Claims 1 to 14 wherein said oligomeric hydroxy functional organophosphate ester is the reaction product of an excess of a trihydroxy alkyl, cycloalkyl or aryl oligoester in which at least one of the hydroxyl groups is secondary, and phosphorus pentoxide.

16. A composition in accordance with any one of Claims 1 to 15 wherein said film-forming material comprises a copolymer bearing pendent hydroxy functionality, having a number average molecular weight ($\overline{M}_n$) of from 1000 to 20,000 and a glass transition temperature (Tg) of from −25°C to 70°C, said copolymer consisting of from 5 to 30 weight percent of monoethylenically unsaturated monomers bearing hydroxy functionality and from 95 to 70 weight percent of other monoethylenically unsaturated monomers.

17. A composition in accordance with any one of Claims 1 to 15 wherein said film-forming component comprises a copolymer bearing pendent epoxy functionality, having a number average molecular weight ($\overline{M}_n$) of from 1500 to 10,000 and a glass transition temperature (Tg) of from −25°C to 70°C, said copolymer consisting of from 10 to 30 weight percent of monoethylenically unsaturated monomers bearing glycidyl functionality and from 90 to 70 weight percent of other monoethylenically unsaturated monomers.

18. A composition in accordance with any one of Claims 1 to 15 wherein the film-forming component comprises a bifunctional copolymer bearing hydroxy functionality and pendent epoxy functionality, having a number average molecular weight ($\overline{M}_n$) of from 1500 to 10,000 and a glass transition temperature (Tg) of from −25°C to 70°C, said copolymer being formed from (i) from 5 to 25 weight percent of mono- ethylenically unsaturated monomers bearing glycidyl functionality and from 5 to 25 weight percent of monoethylenically unsaturated monomer bearing hydroxy functionality with the total of said glycidyl and hydroxy functional monomers being not greater than 30 weight percent of the monomers in said bifunctional copolymer and (ii) from 90 to 70 weight percent of other monoethylenically unsaturated monomers.

19. A composition in accordance with Claims 17 or 18 wherein said monoethylenically unsaturated monomers bearing glycidyl functionality in said copolymer are selected from glycidyl esters and glycidyl ethers.

20. A composition in accordance with Claim 20 wherein said monoethylenically unsaturated monomers bearing glycidyl functionality are glycidyl esters of monoethylenically unsaturated carboxylic acids.

21. A composition in accordance with any one of Claims 16 to 20 wherein said monoethylenically unsaturated monomers bearing hydroxy functionality are hydroxyalkyl acrylates formed by the reaction of $C_2$—$C_4$ dihydric alcohols and acrylic or methacrylic acids.

22. A composition in accordance with any one of Claims 16 to 21 wherein said other monoethylenically unsaturated monomers in said copolymer are acrylates or other monoethylenically unsaturated vinyl monomers.

23. A composition in accordance with Claim 22 wherein said acrylate monomers comprise at least 50 weight percent of the total monomers in said copolymer and are esters of $C_1$—$C_{12}$ monohydric alcohols and acrylic or methacrylic acids.

24. A composition in accordance with any one of Claims 1 to 15 wherein the film-forming component comprises a polyepoxide resin having a number average molecular weight ($\overline{M}_m$) of from 140 to 3000.

25. A composition in accordance with Claim 24 wherein said polyepoxide resin is an aliphatic, cycloaliphatic or aromatic polyepoxide having a number average molecular weight of from 300 to 2000.

26. A composition according to any one of Claims 16 to 25 further comprising an hydroxy-functional additive having a number-average molecular weight of from 150 to 6000.

27. A composition in accordance with Claim 20 wherein said hydroxy functional additive comprises (i) an hydroxy functional polyesters, (ii) an hydroxy functional polyethers, (iii) an hydroxy functional oligoesters, (iv) a monomeric polyol, (v) an hydroxy functional copolymer formed from monoethylenically unsaturated monomers, one or more of which bears hydroxy functionality and which is included in said copolymer in amounts ranging from 2.5 to 30 weight percent of said copolymer, or (vi) a mixture of two or more of (i)—(v).

28. A composition in accordance with any one of Claims 16 to 27 wherein said oligomeric organophosphate ester is included in said composition in an amount sufficient to provide from 0.9 to

1.2 equivalents of acid functionality for each equivalent of epoxy functionality on said copolymer.

29. A composition in accordance with any one of the preceding Claims containing 60% by weight, or more, of non-volatile solids.

30. A composition in accordance with any one of the preceding claims wherein said amino resin crosslinking agent is an aminealdehyde resin selected from condensation products of formaldehyde with melamine, substituted melamine, urea, benzoguanamine, and substituted benzoguanamine, and mixtures of said condensation products, and is included in an amount sufficient to provide from 0.6 to 2.1 equivalents of nitrogen crosslinking of functionality per equivalent of hydroxy functionality.

**Revendications**

1. Composition de revêtement comprenant un constituant filmogène et un composé aminé, laquelle composition durcit par réaction entre le composé aminé et la fonctionnalité hydroxyle présente dans le constituant filmogène, caractérisée en ce que la composition comprend au moins un ester organophosphorique hydroxy-fonctionnel de formule:

$$(R{-}O)_{n}\overset{O}{\overset{\|}{P}}(OH)_{3-n}$$

où n = 1 ou 2 et le ou chaque radical R est indépendamment choisi parmi les radicaux monohydroxylés et dihydroxylés contenant une ou plusieurs liaisons esters et ayant un poids moléculaire de 120 à 1500.

2. Composition suivant la revendication 1, dans laquelle le constituant filmogène a un poids moléculaire moyen en nombre d'au moins 150.

3. Composition suivant la revendication 1 ou 2, dans laquelle le constituant filmogène comprend un composé portant de la fonctionnalité hydroxyle.

4. Composition de revêtement suivant l'une quelconque des revendications 1 à 3, dans laquelle le constituant filmogène comprend un composé qui réagit in situ pendant le durcissement de la composition pour former de la fonctionnalité hydroxyle.

5. Composition suivant la revendication 4, dans laquelle la réaction in situ forme toute la fonctionnalité hydroxyle dans la matière filmogène.

6. Composition de revêtement suivant la revendication 4, dans laquelle le constituant filmogène comprend de la fonctionnalité hydroxyle en plus de celle formée par la réaction in situ.

7. Composition de revêtement suivant l'une quelconque des revendications 4 à 6, dans laquelle le composé porte de la fonctionnalité époxyde qui réagit avec l'ester pendant le durcissement de la composition pour former de la fonctionnalité hydroxyle.

8. Composition suivant l'une quelconque des revendications 1 à 7, dans laquelle la matière filmogène comprend un composé portant tant de la fonctionnalité époxyde que de la fonctionnalité hydroxyle.

9. Composition suivant l'une quelconque des revendications 1 à 7, dans laquelle le constituant filmogène comprend un mélange d'un composé portant de la fonctionnalité hydroxyle et d'un composé portant de la fonctionnalité époxyde.

10. Composition de revêtement suivant l'une quelconque des revendications 1 à 9, dans laquelle R est un radical alcoyle, cycloalcoyle ou aryle monohydroxylé ou dihydroxylé.

11. Composition de revêtement suivant l'une quelconque des revendications 1 à 10, dans laquelle l'ester organophosphorique hydroxy-fonctionnel oligomère est un monoester.

12. Composition de revêtement suivant l'une quelconque des revendications 1 à 10, dans laquelle l'ester organophosphorique hydroxy-fonctionnel oligomère est un diester.

13. Composition de revêtement suivant l'une quelconque des revendications 1 à 10, dans laquelle l'ester organophosphorique hydroxy-fonctionnel oligomère est un mélange de mono- et diesters.

14. Composition de revêtement suivant l'une quelconque des revendications 1 à 13, dans laquelle l'ester organophosphorique hydroxy-fonctionnel oligomère est le produit de réaction d'un oligoester di- ou trihydroxylé et du pentoxyde de phosphore.

15. Composition de revêtement suivant l'une quelconque des revendications 1 à 14, dans laquelle l'ester organophosphorique hydroxy-fonctionnel oligomère est le produit de réaction d'un excès d'un oligoester alcoylique, cycloalcoylique ou arylique trihydroxylé, dans lequel au moins l'un des radicaux hydroxyle est secondaire, et du pentoxyde de phosphore.

16. Composition suivant l'une quelconque des revendications 1 à 15, dans laquelle la matière filmogène comprend un copolymère portant de la fonctionnalité hydroxyle pendante, ayant un poids moléculaire moyen en nombre ($\overline{M}_n$) de 1000 à 20.000 et une température de transition vitreuse (Tg) de −25°C à 70°C, lequel copolymère consiste en 5 à 30% en poids de monomères monoéthyléniquement insaturés portant de la fonctionnalité hydroxyle et en 95 à 70% en poids d'autres monomères monoéthyléniquement insaturés.

17. Composition suivant l'une quelconque des revendications 1 à 15, dans laquelle le constituant

filmogène comprend un copolymère portant de la fonctionnalité époxyde pendante, ayant un poids moléculaire moyen en nombre ($\overline{M}_n$) de 1500 à 10.000 et une température de transition vitreuse (Tg) de —25 à 70°C, lequel copolymère consiste en 10 à 30% en poids de monomères monoéthyléniquement insaturés portant de la fonctionnalité glycidyle et en 90 à 70% en poids d'autres monomères monoéthyléniquement insaturés.

18. Composition suivant l'une quelconque des revendications 1 à 15, dans laquelle le constituant filmogène comprend un constituant filmogène comprend un copolymère bifonctionnel portant de la fonctionnalité hydroxyle et de la fonctionnalité époxyde pendante, ayant un poids moléculaire moyen en nombre ($\overline{M}_n$) de 1500 à 10.000 et une température de transition vitreuse (Tg) de —25 à 70°C, lequel copolymère est formé (i) de 5 à 25% en poids de monomères monoéthyléniquement insaturés portant de la fonctionnalité glycidyle et de 5 à 25% en poids de monomères monoéthyléniquement insaturés portant de la fonctionnalité hydroxyle, le total des monomères à fonctionnalité glycidyle et hydroxyle n'étant pas supérieur à 30% en poids des monomères dans le copolymère bifonctionnel, et (ii) de 90 à 70% en poids d'autres monomères monoéthyléniquement insaturé.

19. Composition suivant la revendication 17 ou 18, dans laquelle les monomères monoéthyléniquement insaturés portant de la fonctionnalité glycidyle dans le copolymère sont choisis parmi les esters glycidyliques et les éthers glycidyliques.

20. Composition suivant la revendication 19, dans laquelle les monomères monoéthyléniquement insaturès portant de la fonctionnalité glycidyle sont des esters glycidyliques d'acides carboxyliques monoéthyléniquement insaturés.

21. Composition suivant l'une quelconque des revendications 16 à 20, dans laquelle les monomères monoéthyléniquement insaturés portant de la fonctionnalité hydroxyle sont des acrylates d'hydroxyalcoyle formés par réaction d'alcools dihydroxylés en $C_2$—$C_4$ et d'acides acryliques ou méthacryliques.

22. Compositon suivant l'une quelconque des revendications 16 à 21, dans laquelle les autres monomères monoéthyléniquement insaturés dans le copolymère sont des acrylates ou d'autres monomères vinyliques monoéthyléniquement insaturés.

23. Composition suivant la revendication 22, dans laquelle les monomères acryliques comprennent au moins 50% en poids des monomères totaux du copolymère et sont des esters d'alcools monohydroxylés en $C_1$—$C_{12}$ et d'acides acryliques ou méthacryliques.

24. Composition suivant l'une quelconque des revendications 1 à 15, dans laquelle le constituant filmogène comprend une résine polyépoxyde ayant un poids moléculaire moyen en nombre ($\overline{M}_n$) de 140 à 3000.

25. Composition suivant la revendication 24, dans laquelle la résine polyépoxyde est un polyépoxyde aliphatique, cycloaphatique ou aromatique ayant un poids moléculaire moyen en nombre de 300 à 2000.

26. Composition suivant l'une quelconque des revendications 16 à 25, qui comprend, en outre, un additif hydroxy-fonctionnel ayant un poids moléculaire moyen en nombre de 150 à 6000.

27. Composition suivant la revendication 26, dans laquelle l'additif hydroxy-fonctionnel comprend (i) un polyester hydroxy-fonctionnel, (ii) un polyéther hydroxy-fonctionnel, (iii) un oligoester hydroxy-fonctionnel, (iv) un polyol monomère, (v) un copolymère hydroxy-fonctionnel formé de monomères monoéthyléniquement insaturés, dont un ou plusieurs portent de la fonctionnalité hydroxyle et qui sont compris dans le copolymère en quantités s'échelonnant de 2,5 à 30% du poids du copolymère ou (vi) un mélange de deux ou plusieurs d'entre (i) à (v).

28. Composition suivant l'une quelconque des revendications 16 à 27, dans laquelle l'ester organophosphorique oligomère est compris dans la composition en une quantité suffisante pour apporter 0,9 à 1,2 éequivalent de fonctionnalité acide par équivalent de fonctionnalité époxyde sur le copolymère.

29. Composition suivant l'une quelconque des revendications précédentes, qui contient 60% en poids ou davantage de solides non volatils.

30. Composition suivant l'une quelconque des revendications précédentes, dans laquelle la résine aminée servant d'agent de réticulation est une résine amine-aldéhyde choisie parmi les produits de condensation du formaldéhyde avec la mélamine, la mélamine substituée, l'urée, la benzoguanamine et la benzoguanamine substituée, outre les mélanges de ces produits de condensation, et est comprise en quantité suffisante pour apporter 0,6 à 2,1 équivalents de fonctionnalité réticulante azotée par équivalent de fonctionnalité hydroxyle.

**Patentansprüche**

1. Lackzusammensetzung aus einer filmbildenden Komponente und einer Aminoverbindung, die durch Reaktion dieser Aminoverbindung mit in besagter filmbildenden Komponente vorhandener Hydroxyfunktionalität aushärtet, dadurch gekennzeichnet, dass die Zusammensetzung mindestens einen hydroxyfunktionellen Organophosphatester der Formel

$$(R-O)_{n}\overset{\overset{O}{\|}}{P}(OH)_{3-n}$$

worin n gleich 1 oder 2 und die Gruppe bzw. Gruppen R unabhängig voneinander unter Mono- und Dihydroxyresten mit einer oder mehreren Esterbrücken ausgewählt sind, mit einem Molekulargewicht von 120 bis 1500 enthält.

2. Zusammensetzung nach Anspruch 1, worin diese filmbildende Komponente ein zahlenmittleres Molekulargewicht von mindestens 150 aufweist.

3. Zusammensetzung nach Anspruch 1 oder 2, worin diese filmbildende Komponente eine Hydroxyfunktionalität aufweisende Verbindung enthält.

4. Lackzusammensetzung nach einem der Ansprüche 1 bis 3, worin diese filmbildende Komponente eine Verbindung enthält, die während der Härtung dieser Zusammensetzung an Orte und Stelle unter Bildung von Hydroxyfunktionalität reagiert.

5. Lackzusammensetzung nach Anspruch 4, worin die Reaktion an Ort und Stelle die gesamte Hydroxyfunktionalität im filmbildenden Material bildet.

6. Lackzusammensetzung nach Anspruch 4, worin diese filmbildende Komponente Hydroxyfunktionalität zusätzlich zu der durch diese Reaktion an Ort und Stelle gebildeten enthält.

7. Lackzusammensetzung nach einem der Ansprüche 4 bis 6, worin diese Verbindung Epoxyfunktionalität aufweist, die während der Härtung dieser Zusammensetzung mit dem besagten Ester unter Bildung von Hydroxyfunktionalität reagiert.

8. Lackzusammensetzung nach einem der Ansprüche 1 bis 7, worin dieses filmbildende Material eine sowohl Epoxy- als auch Hydroxyfunktionalität tragende Verbindung enthält.

9. Lackzusammensetzung nach einem der Ansprüche 1 bis 7, worin diese filmbildende Komponente ein Gemisch aus einer Verbindung mit Hydroxyfunktionalität und einer Verbindung mit Epoxyfunktionalität enthält.

10. Lackzusammensetzung nach einem der Ansprüche 1 bis 9, worin R für einen Mono- oder Dihydroxyalkyl-, -cycloalkyl- oder -arylrest steht.

11. Lackzusammensetzung nach einem der Ansprüche 1 bis 10, worin dieser oligomere hydroxyfunktionelle Organophosphatester ein Monoester ist.

12. Lackzusammensetzung nach einem der Ansprüche 1 bis 10, worin dieser oligomere hydroxyfunktionelle Organophosphatester eine Diester ist.

13. Lackzusammensetzung nach einem der Ansprüche 1 bis 10, worin dieser oligomere hydroxyfunktionelle Organophosphatester ein Gemisch aus Mono- und Diestern ist.

14. Lackzusammensetzung nach einem der Ansprüche 1 bis 13, worin dieser oligomere hydroxyfunktionelle Organophosphatester ein Reaktionsprodukt aus einem Di- oder Trihydroxyoligoester und Phosphorpentoxyd ist.

15. Lackzusammensetzung nach einem der Ansprüche 1 bis 14, worin dieser oligomere hydroxyfunktionelle Organophosphatester ein Reaktionsprodukt aus einem Trihydroxyalkyl-, -cycloalkyl- oder -aryloligoester, in dem mindestens eine der Hydroxylgruppen sekundär ist, im Ueberschuss und Phosphorpentoxyd ist.

16. Zusammensetzung nach einem der Ansprüche 1 bis 15, worin dieses filmbildende Material ein Copolymerisat mit seitenständiger Hydroxyfunktionalität, einem zahlenmittleren Molekulargewicht ($\overline{M}_n$) von 1000 bis 20000 und einem Glasumwandlungspunkt (Tg) von −25°C bis 70°C enthält, wobei dieses Copolymerisat aus 5 bis 30 Gewichtsprozent monoäthylenisch ungesättigten Monomeren mit Hydroxyfunktionalität und 95 bis 70 Gewichtsprozent anderen monoäthylenisch ungesättigten Monomeren besteht.

17. Zusammensetzung nach einem der Ansprüche 1 bis 15, worin diese filmbildende Komponente ein Copolymerisat mit seitenständiger Epoxyfunktionalität, einem zahlenmittleren Molekulargewicht ($\overline{M}_n$) von 1500 bis 10000 und einem Glasumwandlungspunkt (Tg) von −25°C bis 70°C enthält, wobei dieses Copolymerisat aus 10 bis 30 Gewichtsprozent monoäthylenisch ungesättigten Monomeren mit Glycidylfunktionalität und 90 bis 70 Gewichtsprozent anderen monoäthylenisch ungesättigten Monomeren besteht.

18. Zusammensetzung nach einem der Ansprüche 1 bis 15, worin die filmbildende Komponente ein bifunktionelles Copolymerisat mit Hydroxyfunktionalität und seitenständiger Epoxyfunktionalität sowie mit einem zahlenmittleren Molekulargewicht ($\overline{M}_n$) von 1500 bis 10000 und einem Glasumwandlungspunkt (Tg) von −25°C bis 70°C enthält, wobei dieses Copolymerisat aus (i) 5 bis 25 Gewichtsprozent monoäthylenisch ungesättigten Monomeren mit Glycidylfunktionalität und 5 bis 25 Gewichtsprozent monoäthylenisch ungesättigtem Monomer mit Hydroxyfunktionalität, wobei die Summe dieser glycidyl- und hydroxyfunktionellen Monomeren 30 Gewichtsprozent der Monomeren in diesem bifunktionellen Copolymerisat nicht übersteigt, und (ii) 90 bis 70 Gewichtsprozent anderen monoäthylenisch ungesättigten Monomeren gebildet ist.

19. Zusammensetzung nach Anspruch 17 oder 18, worin diese monoäthylenisch ungesättigten, Glycidylfunktionalität tragenden Monomeren in diesem Copolymerisat unter Glycidylestern und Glycidyläthern ausgewählt sind.

20. Zusammensetzung nach Anspruch 19, worin diese monoäthylenisch ungesättigten, Glycidylfunktionalität tragenden Monomeren Glycidylester von monoäthylenisch ungesättigten Carbonsäuren sind.

21. Zusammensetzung nach einem der Ansprüche 16 bis 20, worin diese monoäthylenisch ungesättigten, Hydroxyfunktionalität tragenden Monomeren durch Reaktion von zweiwertigen $C_2$—$C_4$-Alkoholen mit Acryl- oder Methacrylsäure gebildete Hydroxyalkylacrylate sind.

22. Zusammensetzung nach einem der Ansprüche 16 bis 21, worin jene anderen monoäthylenisch ungesättigten Monomeren in diesem Copolymerisat Acrylate oder andere monoäthylenisch ungesättigte Vinylmonomere sind.

23. Zusammensetzung nach Anspruch 22, worin diese Acrylatmonomeren sich auf mindestens 50 Gewichtsprozent der Gesamtmonomeren in diesem Copolymer belaufen und Ester aus einwertigen $C_1$—$C_{12}$-Alkoholen und Acryl- oder Methacrylsäure sind.

24. Zusammensetzung nach einem der Ansprüche 1 bis 15, worin die filmbildende Komponente ein Polyepoxidharz mit einem zahlenmittleren Molekulargewicht ($\bar{M}_n$) von 140 bis 3000 enthält.

25. Zusammensetzung nach Anspruch 24, worin dieses Polyepoxidharz ein aliphatisches, cycloaliphatisches oder aromatisches Polyepoxid mit einem zahlenmittleren Molekulargewicht zon 300 bis 2000 ist.

26. Zusammensetzung nach einem der Ansprüche 16 bis 25, welches ferner einen hydroxyfunktionellen Zusatzstoff mit einem zahlenmittleren Molekulargewicht von 150 bis 600 enthält.

27. Zusammentsetzung nach Anspruch 26, worin dieser hydroxyfunktionelle Zusatzstoff aus (i) einem hydroxyfunktionellen Polyester, (ii) einem hydroxyfunktionellen Polyäther, (iii) einem hydroxyfunktionellen Oligoester, (iv) einem monomeren Polyol, (v) einem hydroxyfunktionellen, aus monoäthylenisch ungesättigten Monomeren gebildetem Copolymerisat, von denen eines oder mehrere Hydroxyfunktionalität tragen und in diesem Copolymerisat in Mengen im Bereich von 2,5 bis 30 Gewichtsprozent des besagten Copolymerisats vorliegen, oder (vi) einem Gemisch aus zwei oder mehreren von (i)—(v) besteht.

28. Zusammensetzung nach einem der Ansprüche 16 bis 27, worin jener oligomere Organophosphatester in dieser Zusammensetzung in einer ausreichenden Menge vorliegt, um 0,9 bis 1,2 Aequivalente Säurefunktionalität pro Aequivalent Epoxyfunktionalität auf diesem Copolymerisat zu liefern.

29. Zusammensetzung nach einem der vorhergehenden Ansprüche, welche 60 Gew.-% oder mehr nichtflächtige Feststoffe enthält.

30. Zusammensetzung nach einem der vorhergehenden Ansprüche, worin das besagte Aminoharzvernetzungsmittel ein unter Kondensationsprodukten aus Formaldehyd mit Melamin, substituiertem Melamin, Harnstoff, Benzoguanamin und substituiertem Benzoguanamin sowie Gemischen dieser Kondensationsprodukte ausgewähltes Amin/Aldehydharz ist und in genügender Menge vorliegt, um 0,6 bis 2,1 Aequivalente Stickstoffvernetzungsfunktionalität pro Aequivalent Hydroxyfunktionalität zu liefern.